# EUROPÄISCHE PATENTANMELDUNG

(11) **EP 3 798 180 A1**
(43) Veröffentlichungstag der Anmeldung: **31.03.2021**
(21) Anmeldenummer: 19020541.9
(22) Anmeldetag: 26.09.2019
(51) Int. Cl.: C01B 3/38, B01J 8/00, B01J 8/02

(54) **REFORMERROHR MIT VERBESSERTEM WÄRMEÜBERGANG**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Tadiello, Jean-Philippe, D-60431 Frankfurt am Main (DE); Gary, Daniel, F-78180 Montigny Bretonneux (FR); Del Gallo, Pascal, F-91410 Dourdan (FR); Chen, Yue, Shanghai (CN)
(74) Vertreter: Dropsch, Holger

(57) **Zusammenfassung**

Es wird ein verbessertes Reformerrohr zur Herstellung von Synthesegas durch Dampfreformierung kohlenwasserstoffhaltiger Einsatzgase vorgeschlagen, bei dem erfindungsgemäß der Einlassbereich mit mindestens einer Vorrichtung versehen ist, die eine Erhöhung der Strömungsgeschwindigkeit des Einsatzgases zwischen den Katalysatorpartikeln und somit eine Erhöhung des Wärmeübergangs zwischen der Innenwand des Reformerrohrs und den Katalysatorpartikeln bewirkt, wobei die mindestens eine Vorrichtung ausgewählt ist aus der Gruppe: Zwischenvolumenfüllpartikel, Verdrängerkörper, statischer Mischer.

## Beschreibung

### Gebiet der Erfindung

Die Erfindung betrifft ein Reformerrohr zur heterogen katalysierten Umwandlung kohlenwasserstoffhaltiger Einsatzstoffe, vorzugsweise Erdgas und leichte flüssige Kohlenwasserstoffe wie Naphtha, mittels Wasserdampf in ein Kohlenoxide und Wasserstoff enthaltendes Synthesegasprodukt. Das erfindungsgemäße Reformerrohr ermöglicht einen verbesserten Wärmeübergang zwischen der mit Brennern beheizten Außenseite des Reformerrohrs und den im Rohrinneren angeordneten Katalysatorpartikeln, an deren Oberfläche mindestens ein Teil der für die katalytische Dampfreformierung charakteristischen chemischen Reaktionen abläuft.

Die Erfindung betrifft ferner ein Verfahren zur Herstellung von Synthesegas durch Dampfreformierung kohlenwasserstoffhaltiger Einsatzstoffe unter Verwendung des erfindungsgemäßen Reformerrohres, sowie einen mit dem Reformerrohr ausgestatteten Reformerofen.

### Stand der Technik

Kohlenwasserstoffe können mit Dampf katalytisch zu Synthesegas, also Mischungen von Wasserstoff (H₂) und Kohlenmonoxid (CO), umgesetzt werden. Wie in Ullmann's Encyclopedia of Industrial Chemistry, Sixth Edition, 1998 Electronic Release, Stichwort "Gas Production", ausgeführt wird, ist diese sogenannte Dampfreformierung (steam reforming) die meist angewandte Methode für die Produktion von Synthesegas, welches nachfolgend zu den Reingasen Wasserstoff und Kohlenmonoxid aufgearbeitet werden kann oder nachfolgend zu weiteren bedeutenden Grundchemikalien wie Methanol oder Ammoniak umgesetzt werden kann. Zwar können unterschiedliche Kohlenwasserstoffe, wie beispielweise Naphtha, Flüssiggas oder Raffineriegase umgesetzt werden, jedoch ist die Dampfreformierung von methanhaltigem Erdgas dominierend.

Die Dampfreformierung von Erdgas verläuft stark endotherm. Sie wird daher in einem Reformerofen durchgeführt, in dem zahlreiche, Katalysator enthaltende Reformerrohre parallel angeordnet sind, in denen die Dampfreformierungsreaktion abläuft. Die Außenwände des Reformerofens sowie seine Decke und sein Boden sind dabei mit mehreren Schichten aus feuerfestem Material ausgekleidet oder zugestellt, das Temperaturen bis zu 1200 °C standhält. Die Reformerrohre werden zumeist mittels Brennern befeuert, die an der Oberseite oder Unterseite oder an den Seitenwänden des Reformerofens angebracht sind und direkt den Zwischenraum zwischen den Reformerrohren befeuern. Dabei erfolgt der Wärmeübergang auf die Reformerrohre durch Wärmestrahlung und konvektive Wärmeübertragung von den heißen Rauchgasen.

Nach Vorerhitzung durch Wärmetauscher oder befeuerte Heizer auf eine Temperatur oberhalb von ca. 500 °C, beispielsweise 680 °C, tritt das Kohlenwasserstoff-Dampf-Gemisch nach Enderhitzung auf ca. 500 bis 800 °C in die Reformerrohre ein und wird dort am Reformierungskatalysator zu Kohlenmonoxid und Wasserstoff umgesetzt. Verbreitet sind Reformierungskatalysatoren auf Nickelbasis. Während höhere Kohlenwasserstoffe vollständig zu Kohlenmonoxid und Wasserstoff umgesetzt werden, erfolgt im Falle des Methans üblicherweise ein Teilumsatz. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf. Zur Energieoptimierung oder bei Einsatzstoffen mit höheren Kohlenwasserstoffen kann nach dem Vorerhitzer ein sogenannter Prereformer zur Vorspaltung der höheren Kohlenwasserstoffe in Methan eingesetzt werden, wobei auch eine erste Teilumwandlung bzw. Vorreformierung der Kohlenwasserstoffe in Synthesegasbestandteile erfolgt. Der vorgespaltene bzw. vorreformierte Einsatzstoff wird dann in einem weiteren Erhitzer auf die gewünschte Reformerrohreintrittstemperatur erhitzt.

Das heiße Synthesegas-Produktgas wird nach Verlassen des Reformerofens in einem oder mehreren Wärmetauschern teilabgekühlt. Das teilabgekühlte Synthesegas-Produktgas durchläuft anschließend noch weitere Konditionierungsschritte, die von der Art des gewünschten Produktes oder des nachgeschalteten Verfahrens anhängig sind.

In technischen Anlagen zur Dampfreformierung von Kohlenwasserstoffen werden üblicherweise Nickelkatalysatoren verwendet, die der Handel in unterschiedlichen Formen bereithält. Früher wurden diese Katalysatoren in Form dickwandiger Ringe mit einem Durchmesser und einer Höhe von 16 mm und einem Loch von 6 bis 8 mm in der Mitte ausgestaltet. Wenn jedoch die Wärmebelastung pro Flächeneinheit hoch ist, werden die Grenzen solcher Katalysatoren erreicht. Die beste Lösung ist die Erhöhung der spezifischen Katalysatoroberfläche. Dies kann durch Verwendung kleinerer Katalysatoren erfolgen, dabei resultiert jedoch ein größerer Druckabfall über die Länge des Reformerrohrs. Aus diesem Grund wurden spezielle Formen von Katalysatorpartikeln wie Speichenräder oder Ringe mit mehreren Löchern eingeführt, die einer Revolvertrommel ähneln.

Generell wird zwischen imprägnierten und ausgefällten Katalysatoren (Vollkatalysatoren) unterschieden. Letztere werden durch Mitfällung aller Bestandteile hergestellt, während imprägnierte Katalysatoren durch separates Imprägnieren eines Trägers mit Nickel als aktivkomponente hergestellt werden. Trägermaterialien können Aluminiumoxid oder Substanzen vom Spinelltyp (z. B. Magnesiumaluminiumoxid) sein. Nickel liegt zunächst in Form von Nickeloxid vor; nach dem Erhitzen wird das System im Reformerrohr durch Wasserstoff reduziert und somit der Katalysatorvorläufer zum aktiven Katalysator umgewandelt.

Die katalytische Dampfreformierung von Kohlenwasserstoffen mit Wasserdampf verläuft stark endotherm, so dass zur Erzielung hoher Umsatzgrade der Wärmetransport zur Oberfläche der Katalysatorpartikel bedeutsam ist, da an deren Oberfläche mindestens ein Teil der für die katalytische Dampfreformierung charakteristischen chemischen Reaktionen abläuft. Um den benötigen Wärmetransport zu gewährleisten, werden die katalysatorgefüllten Reformerrohe üblicherweise in einem Reformerofen angebracht, wobei in dem Reformerofen auch eine Vielzahl von Brennern angebracht sind, in denen ein Brennstoff, beispielsweise ein Teil der Einsatzkohlenwasserstoffe, unter Beimischung von Verbrennungsluft verbrannt wird und deren Brennerflammen häufig parallel, weniger häufig senkrecht zu der Längsachse der Reformerrohre ausgerichtet sind. Der Wärmeübergang von den Brennern auf die Außenwände der Reformerrohre erfolgt daher hauptsächlich durch die Wärmestrahlung der Brennerflammen und konvektiv über die heißen, bei der Verbrennung erzeugten Rauchgase. Der Wärmeübergang auf die Innenwände der Reformerrohre erfolgt sodann vor allem durch Wärmeleitung durch das zumeist metallische Wandmaterial.

Als Mechanismen für den Wärmetransport bzw. der Wärmeübergang von den Innenwänden der Reformerrohre auf ein bestimmtes Volumenelement der Katalysatorschüttung kommen die folgenden Vorgänge in Frage:
(a) Konvektiver Wärmetransport über das durch das Reformerrohr strömende Einsatzgas, enthaltend Kohlenwasserstoffe und Dampf. Das Einsatzgas wird vor Einleiten in das Reformerrohr vorgeheizt und erfährt zusätzlich eine weitere Wärmezufuhr von den Brennern durch die Rohrwand in den stromaufwärts des betrachteten Volumenelementes liegenden Bereichen des Reformerrohrs. Der konvektive Wärmeübergang nimmt dabei mit steigender Strömungsgeschwindigkeit zu. Gemessen über die Länge des Reformerrohres ist er im Einlassbereich am kleinsten, da das eintretende Einsatzgas hier noch eine vergleichsweise geringe Temperatur aufweist. Zudem verläuft die Dampfreformierungsreaktion, beispielsweise von Methan, gemäß der Reaktionsgleichung

   CH₄ + H₂O = CO + 3 H₂

   unter Volumenzunahme, so dass mit fortschreitendem Umsatz eine Zunahme des Gasvolumenstroms in Richtung auf den Reformerrohr-Austritt erfolgt.
(b) Wärmeleitung von den Innenwänden der Reformerrohre über die einzelnen Katalysatorpartikel. Der Beitrag dieser Art des Wärmetransports hängt wesentlich von den Wärmeleitungseigenschaften der Katalysatorpartikel ab. Da diese im Wesentlichen aus einem oxidischen Material bestehen, ist ihre Wärmeleitfähigkeit kleiner als beispielsweise diejenige des metallischen Wandmaterials.
(c) Wärmestrahlung von den Innenwänden der Reformerrohre auf die wandnahen Katalysatorpartikel. Der Weitertransport der Wärme erfolgt dann im Wesentlichen mittels der Vorgänge (a) und (b).

Insbesondere im Einlassbereich der Reformerrohre besteht daher eine hohe Diskrepanz zwischen Wärmebedarf und Wärmetransport. Daher wurde bereits in der US-Patentschrift US 3527575 bereits vorgeschlagen, stromaufwärts des Katalysatorbetts einen Verdrängerkörper in das Reformerrohr einzubringen, der eine Beschleunigung der Gasströmung des Einsatzgases herbeiführen soll. Nachteilig ist dabei jedoch, dass ein signifikanter Teil der Rohrlänge nicht mit Katalysator gefüllt ist und somit für die Reformierungsreaktion genutzt werden kann. Auch müsste ein entsprechender Reformerofen größer konzipiert werden, um solche längeren Rohre aufzunehmen, was zu einem größeren Platzbedarf innerhalb einer Produktionsanlage sowie zu erhöhten Investitionskosten führt.

Die internationale Patentanmeldung WO 2008/032198 lehrt die Verwendung von Refomerrohren, deren Wanddicke und/oder deren Durchmesser sich in Richtung auf den Einlassbereich hin verjüngt, wodurch ein erleichterter Wärmedurchgang durch die Wand bzw. ein verbesserter Wärmetransport zur Rohrmitte resultieren soll. Solche Rohre sind aber nur mit hohem Aufwand herzustellen, weisen kürzere Standzeiten auf und sind hinsichtlich des Drucks weniger belastbar als zylindrische Rohre mit konstanter Wandstärke.

### Beschreibung der Erfindung

Insgesamt kann daher festgestellt werden, dass weiterhin ein Bedarf an Reformerrohren besteht, die insbesondere in deren Einlassbereich einen verbesserten Wärmeübergang auf die Katalysatorschüttung und somit verbesserte Umsätze über die Rohrlänge ermöglichen. Folglich ist es eine Aufgabe der vorliegenden Erfindung, ein solches Reformerrohr bereitzustellen.

Diese Aufgabe wird durch ein Reformerrohr mit den Merkmalen des Anspruchs 1 gelöst. Weitere Aspekte der Erfindung und teilweise bevorzugte Ausgestaltungen des Reformerrohrs nach der Erfindung ergeben sich aus den Unteransprüchen.

### Erfindungsgemäßes Reformerrohr:

Reformerrohr für die Dampfreformierung von Kohlenwasserstoffen, gefüllt mit festem, partikelförmigem Reformierungskatalysator, dadurch gekennzeichnet, dass es im Einlassbereich mit mindestens einer Vorrichtung versehen ist, die eine Erhöhung der Strömungsgeschwindigkeit des Einsatzgases zwischen den Katalysatorpartikeln und somit eine Erhöhung des Wärmeübergangs zwischen der Innenwand des Reformerrohrs und den Katalysatorpartikeln bewirkt, wobei die mindestens eine Vorrichtung ausgewählt ist aus der Gruppe: Zwischenvolumenfüllpartikel, Verdrängerkörper, statischer Mischer.

Die Erfindung umfasst auch einen Reformerofen, der mit den erfindungsgemäßen Reformerrohren ausgestattet ist.

Ferner ist es eine Aufgabe der vorliegenden Erfindung, ein Verfahren zur Herstellung von Synthesegas durch katalytisches Dampfreformieren kohlenwasserstoffhaltiger Einsatzstoffe zur Verfügung zu stellen, bei dem das erfindungsgemäße Reformerrohr verwendet wird.

### Erfindungsgemäßes Verfahren:

Verfahren zur Herstellung von Synthesegas durch katalytisches Dampfreformieren kohlenwasserstoffhaltiger Einsatzstoffe, bevorzugt Erdgas, unter Dampfreformierungsbedingungen in Gegenwart eines für die Dampfreformierung aktiven, festen Katalysators, umfassend folgende Schritte:
(a) Bereitstellen eines Reformerofens nach Anspruch 14 mit einer Vielzahl von Reformerrohren nach einem der der Ansprüche 1 bis 13,
(b) Beheizen der Außenseite der Reformerohre durch Verbrennen eines Brenngases mit Verbrennungsluft, wobei ein heißes Rauchgas gebildet und aus dem Reformerofen ausgeleitet wird,
(c) Einleiten eines Einsatzgases, umfassend Kohlenwasserstoffe und Wasserdampf, in den Einlass der Reformerrohre,
(d) mindestens teilweises katalytisches Umsetzen des Einsatzgases in den Reformerrohren unter Dampfreformierungsbedingungen zu einem Rohsynthesegas, umfassend Wasserstoff und Kohlenoxide,
(e) Ausleiten eines Rohsynthesegases aus dem Auslass der Reformerrohre.

Unter einem statischen Mischer wird eine Vorrichtung zum Mischen von Fluiden verstanden, in der allein die Strömungsbewegung die Vermischung bewirkt und die nicht über bewegte Elemente verfügt. Ein statischer Mischer umfasst strömungsbeeinflussende Elemente, die den Stoffstrom abwechselnd aufteilen und dann wieder zusammenführen, wodurch die Vermischung erreicht wird.

Unter Dampfreformierungsbedingungen sind die dem Fachmann an sich bekannten Verfahrensbedingungen, insbesondere von Temperatur, Druck und Verweilzeit, zu verstehen, wie sie oben und nachfolgend beispielhaft genannt und detailliert im einschlägigen Schrifttum erörtert werden und bei denen mindestens ein Teilumsatz, bevorzugt allerdings technisch relevante Umsätze der Edukt-Kohlenwasserstoffe in Synthesegasprodukte wie CO und Wasserstoff erfolgt.

Die Dampfreformierungsbedingungen werden üblicherweise im Hinblick auf eine Zielzusammensetzung des Synthesegasproduktes festgelegt. Wichtige Parameter sind dabei das Dampf/Kohlenstoffverhältnis (S/C-Verhältnis), der Eintrittsdruck in die Reformerrohre und die Reformierungstemperatur.

Der Erfindung liegt die Erkenntnis zugrunde, dass eine Förderung des Wärmeübergangs zwischen den Innenwänden der Reformerrohre als Wärmequelle und den Katalysatorpartikeln als Orte des Wärmeverbrauchs zu höheren lokalen Umsätzen bei der endothermen Dampfreformierung führt und dass insbesondere dann Vorteile erhalten werden, wenn der Einlassbereich des Reformerrohres mit mindestens einer Vorrichtung ausgestattet ist, die eine Erhöhung der Strömungsgeschwindigkeit des Einsatzgases zwischen den Katalysatorpartikeln und somit eine Erhöhung des Wärmeübergangs zwischen der Innenwand des Reformerrohrs und den Katalysatorpartikeln bewirkt, da einerseits das Reaktions- bzw. Umsatzpotenzial des frischen, noch nicht umgesetzten Einsatzgases im Einlassbereich am größten ist, so dass hier der höchste Wärmebedarf für die Dampfreformierung besteht. Andererseits ist die Strömungsgeschwindigkeit im Einlassbereich der Reformerrohre besonders klein, da das eintretende Einsatzgas hier noch eine vergleichsweise geringe Temperatur aufweist und der axiale Stoffmengenstrom hier am geringsten ist, sich aber nachfolgend in Strömungsrichtung vergrößert, da die Dampfreformierungsreaktion unter Volumenzunahme verläuft. Daher besteht Einlassbereich der Reformerrohre eine besonders hohe Diskrepanz zwischen Wärmebedarf und Wärmetransport und eine Förderung des Wärmeübergangs in diesem Bereich wirkt besonders effektiv hinsichtlich einer Förderung der Dampfreformierung. Insgesamt werden mit solchen erfindungsgemäß ausgestalteten Reformerrohre die folgenden Vorteile erzielt:
- verringerte Gesamtzahl an Reformerrohren und/oder Verringerung der Rohrlänge zum Erreichen eines vorgegebenen Gesamtumsatzes an Einsatzgas,
- bessere Wärmeausnutzung der Rauchgase, hierdurch Einsparung von Brennstoff und Verringerung der Dampfproduktion zur Nutzung der Abwärme der Reformeranlage.

### Bevorzugte Ausgestaltungen der Erfindung

Eine besonders bevorzugte Ausgestaltung des erfindungsgemäßen Reformerrohrs ist dadurch gekennzeichnet, dass der Einlassbereich die ersten 30 %, bevorzugt die ersten 20 %, meist bevorzugt die ersten 10 % der Gesamtlänge des Reformerrohrs in Strömungsrichtung des Einsatzgases umfasst. Untersuchungen haben gezeigt, dass die Ausgestaltung eines Reformerrohrs im Sinne der Erfindung in diesen Bereichen die größten Vorteile bringt, da einerseits das Reaktions- bzw. Umsatzpotenzial des frischen, noch nicht umgesetzten Einsatzgases hier am größten ist, so dass hier der höchste Wärmebedarf für die Dampfreformierung besteht. Andererseits ist die Strömungsgeschwindigkeit im Einlassbereich der Reformerrohre besonders klein, da das eintretende Einsatzgas hier noch eine vergleichsweise geringe Temperatur aufweist und der axiale Stoffmengenstrom hier am geringsten ist, so dass im Einlassbereich der Reformerrohre daher eine besonders hohe Diskrepanz zwischen Wärmebedarf und Wärmetransport besteht.

Gemäß einer Ausgestaltung der Erfindung sind Zwischenvolumenfüllpartikel vorhanden, die zwischen den Katalysatorpartikeln angeordnet sind und die einen kleineren mittleren Durchmesser aufweisen als die Katalysatorpartikel, aber so groß sind, dass sie nicht in für das Einsatzgas zugängliche Hohlräume der Katalysatorpartikel eindringen können. Diese Zwischenvolumenfüllpartikel verbessert einerseits durch Ihre Anwesenheit den Wärmeübergang im Katalysatorbett mittels Wärmeleitung. Andererseits wird das Lückenvolumen des Katalysatorbettes verringert, was zu einer Beschleunigung der Gasströmung und somit zu einem verbesserten konvektiven Wärmeübergang und ferner auch Stoffübergang führt. Die dem Einsatzgas zugängliche Oberfläche der Katalysatorpartikel bleibt bestehen, da die Zwischenvolumenfüllpartikel nicht in für das Einsatzgas zugängliche Hohlräume der Katalysatorpartikel eindringen und daher den Zustrom von Reaktanten und Abstrom von Reaktionsprodukten nicht behindern.

In einem Aspekt der Erfindung sind die Zwischenvolumenfüllpartikel katalytisch aktiv für die Dampfreformierung oder katalytisch inert. Eine katalytische Eigenreaktivität der Zwischenvolumenfüllpartikel kann sinnvoll sein, wenn eine Lenkung der Reformierungsreaktion in Richtung auf eine hohe Ausbeute zu Synthesegasprodukten erwünscht ist; so kann über eine geringere Länge des Reformerrohrs der Endumsatz erreicht werden, wodurch die Reformerrohre kürzer und der benötigte Reformerofen kleiner ausgestaltet werden kann, was zu einer Einsparung bei den Investitionskosten führt. Andererseits kann es sinnvoll sein, katalytisch inerte Zwischenvolumenfüllpartikel in das Katalysatorbett einzubringen, weil somit ihre Beschleunigungswirkung im Vordergrund steht und eine gute radiale Verteilung der Reaktanten im Reformerrohr ermöglicht wird.

In einem weiteren Aspekt der Erfindung weisen die Zwischenvolumenfüllpartikel eine höhere Wärmeleitfähigkeit auf als die Katalysatorpartikel. Dies verstärkt nochmals den Wärmeübergang im Katalysatorbett mittels Wärmeleitung.

Bevorzugt weisen die Zwischenvolumenfüllpartikel einen kleineren Druckverlust pro Längeneinheit der Schüttungslänge auf als die Katalysatorpartikel. Zwar nimmt der Druckverlust über die Länge des Reformerrohrs bei Verwendung von Zwischenvolumenfüllpartikein grundsätzlich zu. Der Druckverlustanstiegt wird aber auf diese Weise begrenzt.

Ein weiterer Aspekt des erfindungsgemäßen Reformerrohrs ist dadurch gekennzeichnet, dass die Zwischenvolumenfüllpartikel als Ringe, Spiralen oder Schrauben ausgestaltet sind. Untersuchungen zeigen, dass bei Verwendung von Zwischenvolumenfüllpartikeln der genannten Formen eine höhere Verbesserung des Wärmeübergangs und/oder ein geringerer Druckverlustanstieg erzielt wird als beispielsweise bei Verwendung von kugelförmigen Zwischenvolumenfüllpartikeln.

In alternativer Ausgestaltung des erfindungsgemäßen Reformerrohrs sind die Vorrichtungen als Verdrängerkörper ausgestaltet, wobei die Verdrängerkörper gebildet werden von konzentrisch und koaxial in das Reformerrohr eingebrachten, nicht von dem Einsatzgas penetrierbaren oder durchströmbaren, bevorzugt zylindrischen Körpern, die so ausgestaltet sind, dass sich zwischen der Innenseite des Reformerrohrs und der Außenseite des Verdrängerkörpers ein Ringspalt bildet, der mit Katalysatorpartikeln befüllbar ist. Solche Verdrängerkörper zeigen eine gute Beschleunigungswirkung und Verbesserung des Wärmeübergangs und können leichter in das Katalysatorbett eingebracht und aus diesem entfernt werden.

In weiterer alternativer Ausgestaltung des erfindungsgemäßen Reformerrohrs sind die Vorrichtungen als statischer Mischer mit zylindrischem Querschnitt ausgestaltet sind, dessen Inneres von dem Einsatzgas durchströmt wird, aber keine Katalysatorpartikel enthält. Neben den Vorteilen der guten Beschleunigungswirkung und Verbesserung des Wärmeübergangs sowie des leichten Einbringens und Entfernens aus dem Katalysatorbett tritt als weiterer Vorteil die Verbesserung der radialen Verteilung der Reaktanten im Reformerrohr hinzu.

Ein weiterer, bevorzugter Aspekt des erfindungsgemäßen Reformerrohrs ist dadurch gekennzeichnet, dass die mindestens eine Vorrichtung so ausgestaltet ist, dass ihre Wirkung hinsichtlich der Erhöhung der Strömungsgeschwindigkeit und der Erhöhung des Wärmeübergangs zwischen der Innenwand des Reformerrohrs und den Katalysatorpartikeln im Einlassbereich des Reformerrohres entlang der Längskoordinate und in Strömungsrichtung abnimmt. Diese Maßnahme berücksichtigt, dass der Wärmebedarf der Reformieurngsreaktion am Eintritt in das Reformerrohr besonders hoch ist und sodann in Richtung auf den Austritt abnimmt, sodass eintrittsseitig die höchste Verstärkungswirkung auf den Wärmeübergang erforderlich ist. Das Abnehmen der Verstärkungswirkung in Strömungsrichtung durch entsprechendes Ausgestalten der mindestens einen Vorrichtung führt zu einer Reduzierung des Druckverlustanstiegs.

In besonderer Ausgestaltung des zuletzt genannten Aspektes sind Zwischenvolumenfüllpartikel vorhanden, wobei der Anteil der mit ihnen gefüllten Zwischenräume zwischen den Katalysatorpartikeln in Strömungsrichtung abnimmt und stromabwärts des Einlassbereiches auf Null zurückgeht. Auf diese Weise kann der Beschleunigungseffekt auf den Einlassbereich konzentriert werden, wohingegen stromabwärts des Einlassbereiches der Druckverlust reduziert wird.

In alternativer Ausgestaltung ist die mindestens eine Vorrichtung als Verdrängerkörper ausgestaltet und weist die Form eines Kegels oder Kegelstumpfes auf, der sich in Strömungsrichtung verjüngt. Auf diese Weise ist -je nach Wahl des Steigung des Kegels oder Kegelstumpfes gegenüber der Horizontalen - eine besonders feine Dosierung der Beschleunigungswirkung möglich. Auch von der normalen Kegelform abweichende Formen mit beispielsweise hyperbolisch verjüngendem axialen Profil des Verdrängerkörpers sind möglich.

In weiterer alternativer Ausgestaltung ist die mindestens eine Vorrichtung als Verdrängerkörper ausgestaltet und umfasst mindestens zwei, bevorzugt mindestens drei voneinander lösbare, nicht vom Einsatzgas penetrierbare Zylinderelemente mit jeweils konstantem Durchmesser, wobei der Durchmesser in Strömungsrichtung abnimmt. Auch auf diese Weise kann die Beschleunigungswirkung in axialer Richtung variiert werden. Als zusätzlicher Vorteil ergibt sich eine leichteres Einbringen in das bzw. Ausbringen aus dem Katalysatorbett für solche Köper mit einfachem Zylinderprofil, die zudem auch einfacher und günstiger hergestellt werden können. Es ist zudem möglich, die einzelnen Zylinder nicht direkt aufeinander zu setzen, sondern zwischen ihnen Katalysatorschichten ohne Verdrängungskörper anzuordnen, die für einen höheren Umsatz und eine verbesserte radiale Vermischung des Einsatzgases sorgen.

### Ausführungsbeispiel

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
- Fig. 1: ein Reformerrohr gemäß Stand der Technik,
- Fig. 2: den Einlassbereich eines Reformerrohrs gemäß einer ersten Ausführungsform der Erfindung,
- Fig. 3: den Einlassbereich eines Reformerrohrs gemäß einer zweiten Ausführungsform der Erfindung,
- Fig. 4: den Einlassbereich eines Reformerrohrs gemäß einer dritten Ausführungsform der Erfindung,
- Fig. 5: den Einlassbereich eines Reformerrohrs gemäß einer vierten Ausführungsform der Erfindung,
- Fig. 6: den Einlassbereich eines Reformerrohrs gemäß einer fünften Ausführungsform der Erfindung,
- Fig. 7: den Einlassbereich eines Reformerrohrs gemäß einer sechsten Ausführungsform der Erfindung.

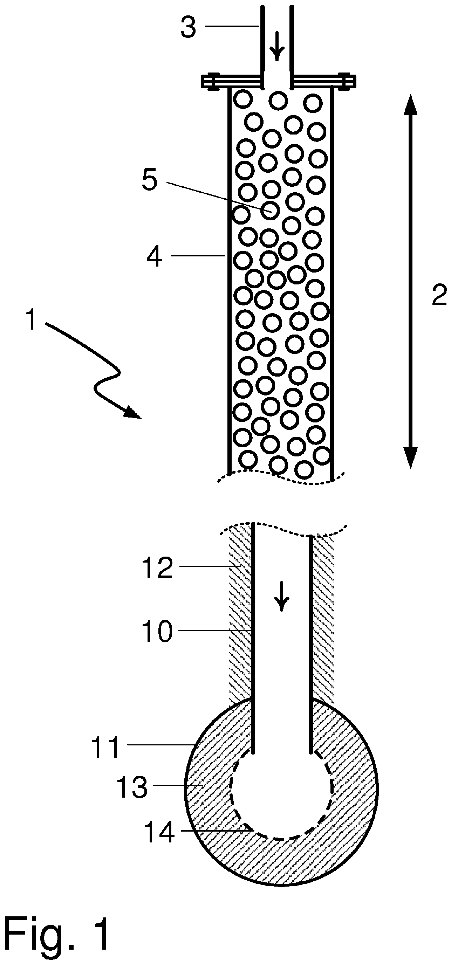

Das in Fig. 1 bildlich dargestellte Reformerrohr 1 gemäß Stand der Technik umfasst den mit Reformierungskatalysator 5 gefüllten Einlassbereich 2 des Rohrs 4, einen nicht bildlich gezeigten, ebenfalls mit Reformierungskatalysator gefüllten Hauptabschnitt sowie den mit thermischen Isolierungen ausgestatteten Produktausleitungs- und Produktsammelleitungen (Bezugszeichen 10 bis 14).

In einem Aspekt umfasst der Einlassbereich die ersten 30 % der Gesamtlänge des Reformerrohrs in Strömungsrichtung des Einsatzgases.

In einem weiteren Aspekt umfasst der Einlassbereich die ersten 20 % der Gesamtlänge des Reformerrohrs in Strömungsrichtung des Einsatzgases.

In einem weiteren Aspekt umfasst der Einlassbereich die ersten 10 % der Gesamtlänge des Reformerrohrs in Strömungsrichtung des Einsatzgases.

Über die Zuleitung 3 für das Einsatzgas tritt entschwefeltes Erdgas gemeinsam mit Reformierungsdampf in das Reformerrohr ein (als Strömungspfeil angedeutet) und wird in diesem unter Dampfreformierungsbedingungen zu Synthesegasprodukten umgesetzt, die Wasserstoff und Kohlenoxide umfassen. Das Erdgas und der Reformierungsdampf treten nach dem Eintritt in das Reformerrohr in die Katalysatorschüttung 5 ein, die beispielsweise aus ringförmigen oder wagenradförmigen Partikeln eines handelsüblichen, festen, nickelbasierten Reformierungskatalysators gebildet wird.

An der katalytisch aktiven Oberfläche des Reformierungskatalysators findet die endotherme Dampfreformierungsreaktion statt. Das teilumgesetzte Erdgas, das neben Kohlenoxiden und Wasserstoff auch noch nicht umgesetztes Methan enthält, tritt gemäß einer Ausgestaltung der Erfindung nach Verlassen der Katalysatorschüttung 5 in die Produktleitung 10 ein, die nach einer üblichen Ausgestaltung auf ihrer Außenseite mit einer Isolierschicht 12 versehen ist. Die Produktleitung 10 ist mit der Sammelleitung 11 verbunden, die nach einer üblichen Ausgestaltung auf ihrer Innenseite mit Isoliermaterial 13 und/oder einer korrosionsresistenten, beispielsweise keramischen Beschichtung 14 versehen ist. Über die Sammelleitung wird der Synthesegasproduktstrom aus dem Reformerrohr 1 ausgeleitet und wird der weiteren Aufarbeitung zugeführt. Diese kann je nach Verwendungszweck des Synthesegasproduktes eine Kohlenmonoxid-Konvertierung, eine Gaswäsche zur Abtrennung von Kohlendioxid, eine Druckwechseladsorption zur Wasserstoffabtrennung sowie weitere Aufarbeitungsstufen umfassen.

Neben der soeben erörterten, beispielhaften Ausgestaltung in Fig. 1 existieren alternative Ausgestaltungen ohne spezifische Isolierschichten und weitere korrosionsresistente Ausrüstungen. Grundsätzlich beeinflusst die Ausgestaltung des Austritts des Reformerrohrs und der Sammelleitung nicht die Wirkungsweise der vorliegenden Erfindung.

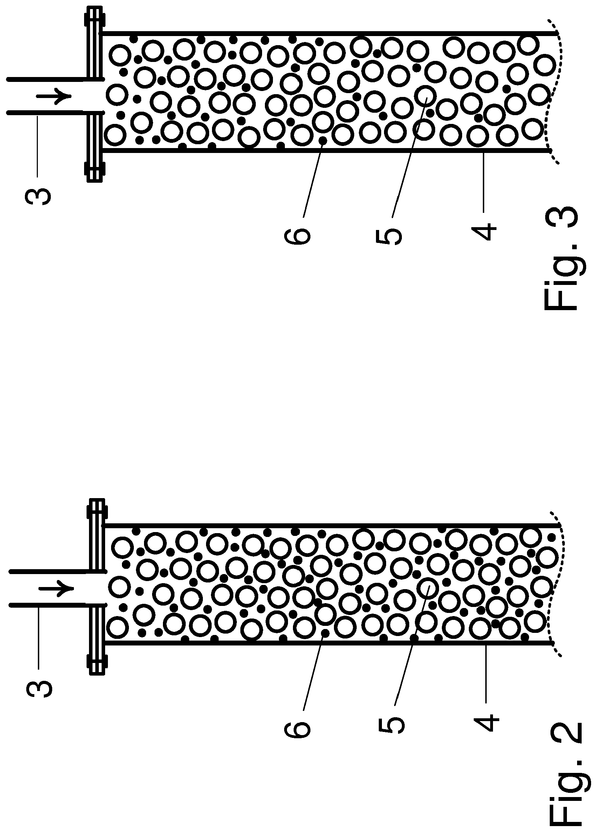

Fig. 2 zeigt eine erste Ausführungsform des erfindungsgemäßen Reformerrohrs, wobei gleiche Bezugszeichen gleichen Bestandteilen des Reformerrohrs entsprechen. Neben den Katalysatorpartikeln 5 enthält das im Rohr 4 angeordnete Festbett nun zusätzlich Zwischenvolumenfüllpartikel 6. Diese sind in Fig. 2 der leichteren Darstellbarkeit halber als Kugeln angedeutet; bevorzugt sind sie aber als Ringe, Spiralen oder Schrauben ausgestaltet. Sie sind zwischen den Katalysatorpartikeln angeordnet und weisen einen kleineren mittleren Durchmesser auf als die Katalysatorpartikel, sind aber so groß, dass sie nicht in für das Einsatzgas zugängliche Hohlräume der Katalysatorpartikel eindringen können. Bevorzugt weisen sie eine höhere Wärmeleitfähigkeit und einen kleineren Druckverlust pro Längeneinheit der Schüttungslänge auf als die Katalysatorpartikel.

Fig. 3 zeigt eine zweite Ausführungsform des erfindungsgemäßen Reformerrohrs, wobei gleiche Bezugszeichen gleichen Bestandteilen des Reformerrohrs entsprechen. Für die Zwischenvolumenfüllpartikel gelten dieselben Erläuterungen wie im Zusammenhang mit der Beschreibung von Fig. 2. Allerdings nimmt hier der Anteil der mit ihnen gefüllten Zwischenräume zwischen den Katalysatorpartikeln in Strömungsrichtung ab und geht stromabwärts des Einlassbereiches auf Null zurück. Auf diese Weise kann der Beschleunigungseffekt auf den Einlassbereich konzentriert werden, wohingegen stromabwärts des Einlassbereiches der Druckverlust reduziert wird.

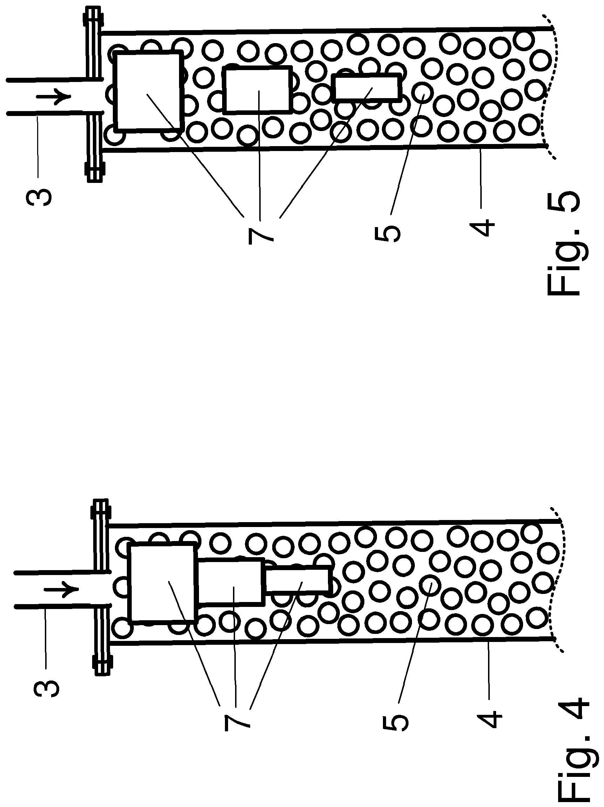

Fig. 4 und Fig. 5 zeigen eine dritte und eine vierte Ausführungsform des erfindungsgemäßen Reformerrohrs, wobei gleiche Bezugszeichen gleichen Bestandteilen des Reformerrohrs entsprechen. Anstelle der Zwischenvolumenfüllpartikel wurden nun Verdrängerkörper in das Katalysatorbett eingebracht, um die angestrebte Beschleunigungswirkung auf die Gasströmung im Einlassbereich zu bewirken. Im vorliegenden Beispiel wurden drei zylindrisch geformte Körper mit in Strömungsrichtung abnehmendem Durchmesser verwendet, die beim Befüllen des Rohrs 4 mit dem Katalysator 5 in das Katalysatorbett eingebracht werden. Sie sind aufeinander aufgesetzt und nicht miteinander verbunden. Sie können entweder als Hohlkörper oder aus Vollmaterial, beispielsweise Metall, hergestellt werden. Wesentlich ist es, dass das Einsatzgas nicht in sie eindringen kann, so dass Totzonen vermieden werden. In dem in Fig. 5 gezeigten Ausführungsbeispiel sind die einzelnen Verdrängerkörper im Katalysatorbett beabstandet voneinander angeordnet, so dass stromanwärts jedes Verdrängerkörpers eine verbesserte radiale Vermischung des Einsatzgases erfolgen kann, was den Umsatz erhöht.

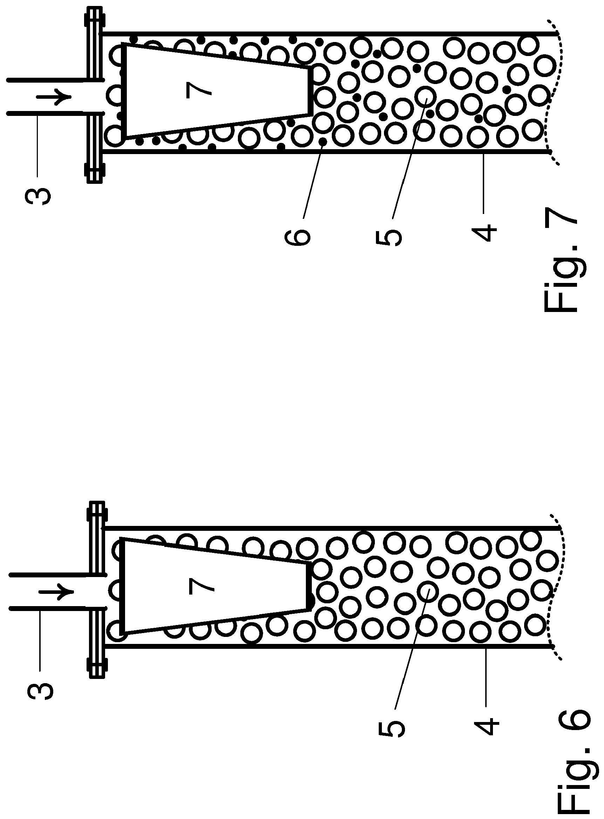

Fig. 6 und Fig. 7 zeigen eine fünfte und eine sechste Ausführungsform des erfindungsgemäßen Reformerrohrs, wobei gleiche Bezugszeichen gleichen Bestandteilen des Reformerrohrs entsprechen. Anstelle der zylindrisch geformten Einzelkörper wurde nun jeweils ein Verdrängerkörper in das Katalysatorbett eingebracht, der die Form eines sich in Strömungsrichtung verjüngenden Kegelstumpfs aufweist, um die angestrebte Beschleunigungswirkung auf die Gasströmung im Einlassbereich zu bewirken. Auch dieser Verdängerkörper ist so ausgestaltet, dass das Einsatzgas nicht in ihn eindringen kann, so dass Totzonen vermieden werden. In der in Fig. 7 gezeigten Ausführungsform wurden zusätzlich zu dem Verdängerkörper noch Zwischenvolumenfüllpartikel in das Katalysatorbett eingebracht, wobei der Anteil der mit ihnen gefüllten Zwischenräume in Strömungsrichtung abnimmt und stromabwärts des Einlassbereiches auf Null zurückgeht. Auf diese Weise wird eine besonders hohe Beschleunigungswirkung im Einlassbereich und ein günstiger Kompromiss zwischen Beschleunigungswirkung und Druckverlust erzielt.

### Bezugszeichenliste

- [1]: Reformerrohr
- [2]: Einlassbereich
- [3]: Zuleitung Einsatzgas
- [4]: Rohr
- [5]: Katalysatorschüttung
- [6]: Zwischenvolumenfüllpartikel
- [7]: Verdrängerkörper
- [10]: Produktleitung
- [11]: Sammelleitung
- [12]: Isolierschicht
- [13]: Isoliermaterial
- [14]: Beschichtung

## Patentansprüche

1. Reformerrohr für die Dampfreformierung von Kohlenwasserstoffen, gefüllt mit festem, partikelförmigem Reformierungskatalysator, **dadurch gekennzeichnet, dass** es im Einlassbereich mit mindestens einer Vorrichtung versehen ist, die eine Erhöhung der Strömungsgeschwindigkeit des Einsatzgases zwischen den Katalysatorpartikeln und somit eine Erhöhung des Wärmeübergangs zwischen der Innenwand des Reformerrohrs und den Katalysatorpartikeln bewirkt, wobei die mindestens eine Vorrichtung ausgewählt ist aus der Gruppe: Zwischenvolumenfüllpartikel, Verdrängerkörper, statischer Mischer.

2. Reformerrohr nach Anspruch 1, **dadurch gekennzeichnet, dass** der Einlassbereich die ersten 30 %, bevorzugt die ersten 20 %, meist bevorzugt die ersten 10 % der Gesamtlänge des Reformerrohrs in Strömungsrichtung des Einsatzgases umfasst.

3. Reformerrohr nach Anspruch 1 oder 2, **dadurch gekennzeichnet, dass** Zwischenvolumenfüllpartikel vorhanden sind, die zwischen den Katalysatorpartikeln angeordnet sind und die einen kleineren mittleren Durchmesser aufweisen als die Katalysatorpartikel, aber so groß sind, dass sie nicht in für das Einsatzgas zugängliche Hohlräume der Katalysatorpartikel eindringen können.

4. Reformerrohr nach einem der vorigen Ansprüche, **dadurch gekennzeichnet, dass** die Zwischenvolumenfüllpartikel katalytisch aktiv für die Dampfreformierung oder katalytisch inert sind.

5. Reformerrohr nach einem der vorigen Ansprüche, **dadurch gekennzeichnet, dass** die Zwischenvolumenfüllpartikel eine höhere Wärmeleitfähigkeit aufweisen als die Katalysatorpartikel.

6. Reformerrohr nach einem der vorigen Ansprüche, **dadurch gekennzeichnet, dass** die Zwischenvolumenfüllpartikel einen kleineren Druckverlust pro Längeneinheit der Schüttungslänge aufweisen als die Katalysatorpartikel.

7. Reformerrohr nach einem der vorigen Ansprüche, **dadurch gekennzeichnet, dass** die Zwischenvolumenfüllpartikel als Ringe, Spiralen oder Schrauben ausgestaltet sind.

8. Reformerrohr nach Anspruch 1, **dadurch gekennzeichnet, dass** die Vorrichtungen als Verdrängerkörper ausgestaltet sind, wobei die Verdrängerkörper gebildet werden von konzentrisch und koaxial in das Reformerrohr eingebrachten, nicht von dem Einsatzgas penetrierbaren oder durchströmbaren, bevorzugt zylindrischen Körpern, die so ausgestaltet sind, dass sich zwischen der Innenseite des Reformerrohrs und der Außenseite des Verdrängerkörpers ein Ringspalt bildet, der mit Katalysatorpartikeln befüllbar ist.

9. Reformerrohr nach Anspruch 1, **dadurch gekennzeichnet, dass** die Vorrichtungen als statischer Mischer mit zylindrischem Querschnitt ausgestaltet sind, dessen Inneres von dem Einsatzgas durchströmt wird, aber keine Katalysatorpartikel enthält.

10. Reformerrohr nach einem der vorigen Ansprüche, **dadurch gekennzeichnet, dass** die mindestens eine Vorrichtung so ausgestaltet ist, dass ihre Wirkung hinsichtlich der Erhöhung der Strömungsgeschwindigkeit und der Erhöhung des Wärmeübergangs zwischen der Innenwand des Reformerrohrs und den Katalysatorpartikeln im Einlassbereich des Reformerrohres entlang der Längskoordinate und in Strömungsrichtung abnimmt.

11. Reformerrohr nach Anspruch 10, **dadurch gekennzeichnet, dass** Zwischenvolumenfüllpartikel vorhanden sind und dass der Anteil der mit ihnen gefüllten Zwischenräume zwischen den Katalysatorpartikeln in Strömungsrichtung abnimmt und stromabwärts des Einlassbereiches auf Null zurückgeht.

12. Reformerrohr nach Anspruch 10, **dadurch gekennzeichnet, dass** die mindestens eine Vorrichtung als Verdrängerkörper ausgestaltet ist und die Form eines Kegels oder Kegelstumpfes aufweist, der sich in Strömungsrichtung verjüngt.

13. Reformerrohr nach Anspruch 10, **dadurch gekennzeichnet, dass** die mindestens eine Vorrichtung als Verdrängerkörper ausgestaltet ist und mindestens zwei, bevorzugt mindestens drei voneinander lösbare, nicht vom Einsatzgas penetrierbare Zylinderelemente mit jeweils konstantem Durchmesser umfassen, wobei der Durchmesser in Strömungsrichtung abnimmt.

14. Reformerofen, ausgerüstet mit einer Vielzahl von Reformerrohren nach einem der Ansprüche 1 bis 13, wobei der Reformerofen auch Brenner umfasst, die so ausgestaltet sind, dass die Reformerrohre von außen durch Verbrennen eines Brenngases mit Verbrennungsluft beheizt werden können.

15. Verfahren zur Herstellung von Synthesegas durch katalytisches Dampfreformieren kohlenwasserstoffhaltiger Einsatzstoffe, bevorzugt Erdgas, unter Dampfreformierungsbedingungen in Gegenwart eines für die Dampfreformierung aktiven, festen Katalysators, umfassend folgende Schritte:
(a) Bereitstellen eines Reformerofens nach Anspruch 14 mit einer Vielzahl von Reformerrohren nach einem der der Ansprüche 1 bis 13,
(b) Beheizen der Außenseite der Reformerohre durch Verbrennen eines Brenngases mit Verbrennungsluft, wobei ein heißes Rauchgas gebildet und aus dem Reformerofen ausgeleitet wird,
(c) Einleiten eines Einsatzgases, umfassend Kohlenwasserstoffe und Wasserdampf, in den Einlass der Reformerrohre,
(d) mindestens teilweises katalytisches Umsetzen des Einsatzgases in den Reformerrohren unter Dampfreformierungsbedingungen zu einem Rohsynthesegas, umfassend Wasserstoff und Kohlenoxide,
(e) Ausleiten eines Rohsynthesegases aus dem Auslass der Reformerrohre.
